# EUROPEAN PATENT APPLICATION

(11) **EP 4 254 363 A1**
(43) Date of publication of application: **04.10.2023**
(21) Application number: 22165958.4
(22) Date of filing: 31.03.2022
(51) Int. Cl.: G06V 30/422, G06V 30/18, G06V 30/41, G06V 30/412, G06N 3/04, G06N 3/08

(54) **GENERATING COMMUNICATION SOURCE REFERENCE MAPPINGS BETWEEN SUBSTATION ELEMENTS OF A SUBSTATION**

(71) Applicant: Siemens Aktiengesellschaft, 80333 München (DE)
(72) Inventor: E, Navin, 635109 Hosur, Tamil Nadu (IN); GUPTA, Prerna, 560102 Bengaluru, Karnataka (IN); M, Divya, 560061 Bangalore, Karnataka (IN); S, Deepalakshmi, 560099 Bangalore, Karnataka (IN)
(74) Representative: Patentanwaltskanzlei WILHELM & BECK

(57) **Abstract**

Embodiments of the present invention relate to a method (500) and system specification description (SSD) generator tool (202) for generating communication source reference mappings of a system specification description (SSD) file for a substation (100). The method (500) receives (502) an image of a single-line diagram (SLD) (400A) for the substation (100), by an SSD generator tool (202) and identifies (504) one or more substation elements (400B1-400B15) from the image of the SLD (400A). The method (500) fetches (506) textual description (400C) associated with the identified substation elements (400B1-400B15) using a deep learning algorithm and determines (508) one or more connections (400D) between the identified substation elements (400B1-400B15) using a traversal algorithm. The method (500) generates (510) the communication source reference (400E) mappings between the substation elements (400B1-400B15), of the SSD file based on the determined connections (400D) between the identified substation elements (400B1-400B15) and the fetched textual description (400C).

## Description

The present disclosure generally relates to an electrical substation, and more particularly to generating communication source reference mappings, between substation elements, of a system specification description (SSD) file for a substation.

IEC 61850 is an international standard well-known for defining communication protocols for intelligent electronic devices (IEDs) at electrical substations. At present, the latest challenge for implementing the IEC 61850 standard is related to efforts being made to streamline the IEC 61850 engineering process using a top-down approach over a bottom-up approach.

The bottom-up approach commences a system integration with lower-level components and then, slowly iterates into a complex system. On the other hand, the top-down approach tackles a big picture from the outset. This top-down approach aims to design an entire system that meets tight functional, performance and layout requirements while capitalizing on efficiency savings from repeatable subsystems.

Further, the top-down approach also delivers a plethora of benefits as this approach leads to fewer design iterations and also provides a clear picture of a final outcome quite early in the process. Thereby, the top-down approach allows designs to be interrogated more rigorously and issues ironed-out before they arise. Most importantly, the top-down approach promotes the reuse of system and sub-system designs. Once properly instituted, the top-down approach supports a standardized engineering process that primarily involves mixing and matching of preestablished templates.

However, despite of the fact that the top-down approach offers several advantages, the bottom-up approach has been a favored approach until now. This is due to the reason that the top-down approach front-loads complexity and needs to be properly aligned with existing business processes to deliver maximum benefits. This makes the top-down approach a daunting task for utilities, who are therefore eager to compare notes and hear best-practices and lessons-learnt from successful implementations of this approach.

Furthermore, in the top-down approach, the engineering process starts with a specification that is supported by a system configuration tool. Technical team manually creates a system specification description (SSD) file for a substation and also manually creates communication source reference mappings, between elements of the substation, of the SSD file. The SSD file having the communication source reference mappings between substation elements is then imported into an IED configurator tool (offered by IEC 61850 standard) to map data and make the SSD file usable for the configuration with less manual activities.

Currently, this SSD file having the communication source reference mappings between elements of the substation is created based on a single-line diagram (SLD) of the substation and engineering documents. To create the SSD file and the communication source reference mappings between substation elements from the SLD and the engineering documents, a technician must have basic knowledge of the IEC 61850 concepts to read the SLD and the engineering documents. Then, the SSD file having the communication source reference mappings between substation elements is manually created by the technician using the system specification tool to map the IEC 61850 configuration and requirements in the engineering document. The created SSD file is then fed to IED configurator tools (such as DIGSI) for creation of project, adding devices and creating topology etc. Manual creation of the SSD having the communication source reference mappings between substation elements is a time-consuming process and requires manual effort. For instance, for a single line diagram having 50 devices (with components such as circuit breaker, transformers, switches etc.), the technician takes an approximately 6-10 days to create the SSD file and the communication source reference mapping of the SSD file. And, for a beginner, this takes almost 20 days. If the SLD has even more components, then, the time and the efforts will be more to create the SSD file and the communication source reference mapping of the SSD file.

In light of the above, there is a need of an automated solution to reduce manual efforts and time taken to generate communication source reference mappings between substation elements. Further, there is also a need for an automated solution for accurately identifying substation elements in the SLD to create the communication source reference of the SSD file.

The object of the present disclosure is achieved by a method for generating communication source reference mappings of a system specification description (SSD) file for a substation. The method comprises the steps of receiving an image of a single-line diagram (SLD) for a substation, by an SSD generator tool and identifying one or more substation elements from the image of the SLD, using an artificial neural network. Further, the artificial neural network is trained for identifying the one or more substation elements. The method also comprises the steps of fetching textual description associated with the identified substation elements using a deep learning algorithm and determining one or more connections between the identified substation elements using a traversal algorithm. The method also comprises the step of generating the communication source reference mappings between the substation elements, of the SSD file based on the determined connections between the identified substation elements and the fetched textual description.

In an embodiment, identifying the one or more substation elements comprises removing noise from the image.

In an embodiment, the communication source reference mappings correspond to sampled measured values (SMV) mapping and generic object-oriented substation event (GOOSE) mapping between the identified substation elements in the SSD file.

In an embodiment, an untrained artificial neural network is trained for identifying the one or more substation elements by feeding images of a plurality of single-line diagrams (SLDs) for a substation, to the artificial neural network of the SSD generator tool and by deeding the identified substation elements, components information, and interactions between the substation components in the SSD generator tool to the artificial neural network of the SSD generator tool. Then, the artificial neural network is calibrated for identifying the substation elements based on said feeding.

In an embodiment, the single-line diagram for the substation corresponds to an electrical diagram depicting a representation of connections and functions of the substation and an associated protection and control system.

In an embodiment, the one or more substation elements corresponds to intelligent electronic devices (IEDs), merging unit device/s, busbar/s, disconnector/s, protection function/s, insulator/s, lightning arrestor/s, circuit breakers, isolator/s, earthing switch/es, current transformer/s, voltage transformer/s, power transformer/s, shunt reactor/s, control and protection panel/s, Power Line Carrier Communication (PLCC) equipment/s, and/or low voltage (LV) AC switchgears.

In an embodiment, the artificial neural network is a faster region based convolutional neural network (R-CNN).

In an embodiment, the textual description corresponds to a name and a type associated with each of the one or more substation elements.

In an embodiment, a Region of Interest (ROI) corresponding to a bay area is identified, from the image of the SLD, in the substation for fetching the textual description.

In an embodiment, the textual description associated with the identified substation elements is fetched from the identified Region of Interest (ROI) corresponding to the bay area.

In an embodiment, the deep learning algorithm corresponds to an Efficient accurate scene text detector (EAST) algorithm.

In an embodiment, the one or more connections between the identified substation elements corresponds to a representation of physical wires between the one or more substation elements.

In an embodiment, the traversal algorithm corresponds to a Depth first search (DFS) algorithm.

In an embodiment, the SSD file is associated with the substation.

The object of the present disclosure is also achieved by an system specification description (SSD) generator tool for generating communication source reference mappings of a system specification description (SSD) file for a substation. The SSD generator tool comprises a receiver configured to receive an image of a single-line diagram (SLD) for a substation. The SSD generator tool comprises a parser configured to identify one or more substation elements from the image of the SLD, using an artificial neural network. Further, the artificial neural network is trained for identifying the one or more substation elements. The parser is also configured to fetch textual description associated with the identified substation elements using a deep learning algorithm and determine one or more connections between the identified substation elements using a traversal algorithm. The SSD generator tool comprises a processor configured to generate the communication source reference mappings between the substation elements of the SSD file based on the determined connections between the identified substation elements and the fetched textual description.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a system architecture for a substation, in accordance with an embodiment of the present invention;
- FIG 2: is a system diagram depicting communication between a system specification description (SSD) generator tool, a system configurator tool, and an IED configurator tool, in accordance with an embodiment of the present invention;
- FIGs 3: is a block diagram of a system specification description (SSD) generator tool, in accordance with an embodiment of the present invention;
- FIGS 4A: is an exemplary single line diagram (SLD) for a substation, in accordance with an embodiment of the present invention;
- FIGS 4B: depicts exemplary substation elements identified from the SLD, in accordance with an embodiment of the present invention;
- FIGS 4C: depicts exemplary textual description, in accordance with an embodiment of the present invention;
- FIGS 4D: depicts exemplary connection/s between identified substation elements, in accordance with an embodiment of the present invention;
- FIGS 4E: depicts exemplary communication source reference mappings between the substation elements, in accordance with an embodiment of the present invention; and
- FIG 5: is a method diagram for generating communication source reference mappings of a system specification description (SSD) file, in accordance with an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a system and a method for generating communication source reference mappings between substation elements, of a system specification description (SSD) file for a substation are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

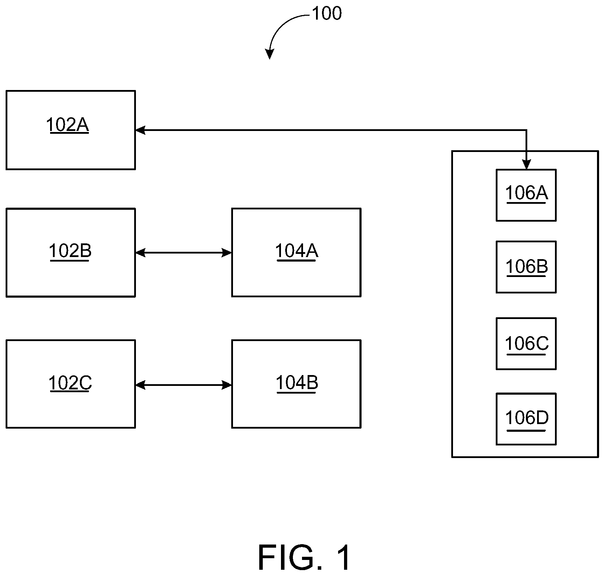

FIG 1 is a system architecture for a substation 100, in accordance with an embodiment of the present invention. The substation 100 comprises, but is not limited to, one or more transformers 102A-102C, one or more merging unit devices 104A-104B, a meter 106A and one or more bay devices 106B-106D. The one or more transformers 102A-102C comprise a first transformer 102A, a second transformer 102B, a third transformer 102C. The one or more merging unit devices 104A-104B comprise a first merging unit device 104A and a second merging unit device 104B. As can be seen, the first merging unit device 104A is connected to the second transformer 102B through a wired network and the second merging unit device 104B is connected to the third transformer 102C through a wired network. Also, the one or more bay devices 106B-106D comprise a bay controller 106B, a first line protection device 106C, and a second line protection device 106D.

As used herein, the term "substation 100" refers to a facility used for stepping-up or stepping-down voltage in utility power lines. In general, voltage is stepped up if the power is transmitted through long-distance transmission lines and the voltage is stepped down when the power is to enter a local distribution line. Herein, the first transformer 102A, the second transformer 102B, and the third transformer 102C may be a current transformer, a voltage transformer, or a power transformer. Although, FIG 1 depicts a limited number of elements of the substation 100, it is understood for a person skilled in the art that the substation 100 may have additional substation elements such as switchgears, disconnector/s, circuit breakers etc.

Further, the first merging unit device 104A has subscribed for sampled measured values (SMV) of the second transformer 102B and the second merging unit device 104B has subscribed for SMV of the third transformer 102C. Each of the first merging unit device 104A and the second merging unit device 104B digitize the subscribed SMV and sends the digitized SMV to the one or more bay devices 106B-106D via a SMV data stream over a wired network. Each of the merging unit devices 104A-104B publish the subscribed current-sampled and voltage-sampled values according to the IEC 61850-9-2 and IEC 61869-9 standards. Further, the one or more bay devices 106B-106D allow a subscription of current-sampled and voltage-sampled values published by the merging unit devices 104A-104B complying with the IEC 61850-9-2 and IEC 61869-9 standards.

Moreover, the merging unit devices 104A-104B and the one or more bay devices 106B-106D are collectively referred as intelligent electronic devices (IEDs). The IEDs 104A-104B, 106B-106D communicate with each other through a high-speed messaging technique called generic object-oriented substation event messaging (GOOSE). On the occurrence of any status change, an IED 104A-104B, 106B-106D multicasts a high-speed GOOSE message containing the status of binary inputs, trip signals, or status of primary equipment (for example, circuit breaker). The GOOSE message is based on repetitions for a high reliability and for monitoring purposes of the communication link.

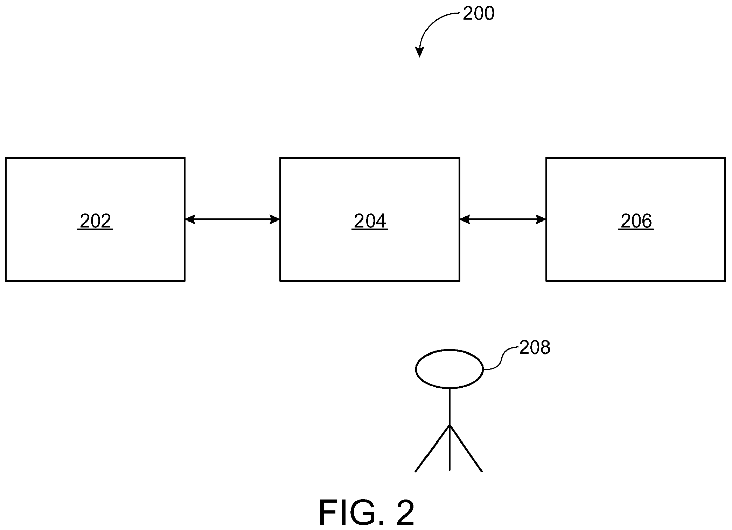

FIG 2 is a system diagram 200 depicting communication between a system specification description (SSD) generator tool 202, a system configurator tool 204, and an IED configurator tool 206, in accordance with an embodiment of the present invention. Herein, the SSD generator tool 202 generates a system specification description (SSD) file associated with a substation 100 (as explained above in FIG 1). The SSD generator tool 202 also generates communication source reference (i.e. SMV and GOOSE) mappings between substation elements, of the SSD file as explained below.

In an exemplary embodiment, the SSD file contains a complete specification of the substation 100, including a single-line configuration, also referred to as a single-line diagram, of the substation 100. The assignment of logical nodes from IEC 61850 to primary equipment can also be described in the SSD file. This allows device requirements to be defined in the SSD file so that the devices can be used in the substation 100. The contents of the SSD file are information from the substation 100, templates for data types, definitions of logical node types etc.

In the present examples, the system configurator tool 204 is provided by the IEC standard and is used to receive the SSD file generated for the substation 100 from the SSD generator tool 202. The system configurator tool 204 uses the SSD file to generate a substation configuration description (SCD) file. In an exemplary embodiment, the SCD file describes a version of the substation 100. Data between the system configurator tool 204 and the IED configurator tool 206 is exchanged with using the Instantiated IED Description (IID)/SCD file. The SCD file contains information from network structure of the substation 100, an assignment of devices to the primary equipment, a substation-internal communication etc.

Further, the IED configurator tool 206 is a configuration and operation tool for the IEDs 104A-104B, 106B-106D. Using the IED configurator tool 206, a technician/user 208 can create system topologies, configure hardware and communication networks, set function settings and perform many further tasks related to the IEDs 104A-104B, 106B-106D. The IED configurator tool 206 receives the SCD file from the system configurator tool 204 for further processing.

Moreover, the SSD generator tool 202, the system configurator tool 204 and the IED configurator tool 206 may also communicate with each other through a wired or a wireless network (not shown) when the technician 208 operates or uses any of these tools.

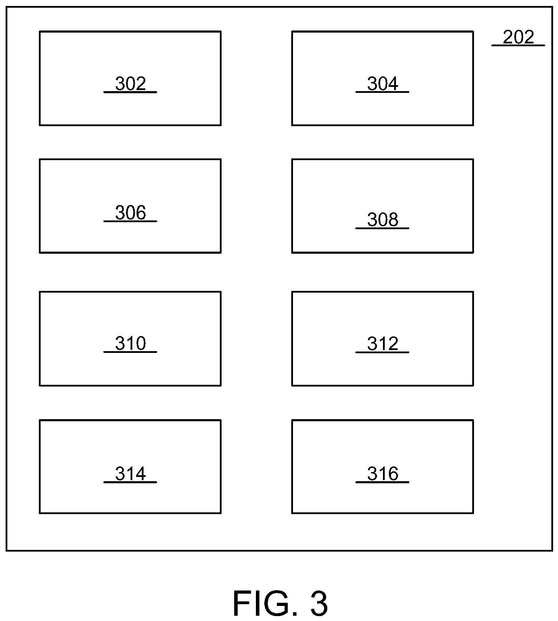

FIG 3 is a block diagram of an SSD generator tool 202, in accordance with an embodiment of the present invention. The SSD generator tool 202 comprises, but is not limited to, an interface 302, a transmitter 304, a receiver 306, a parser 308, a processor 310, a memory 312, and an image preprocessing unit 314.

A technician 208 uses the interface 302 of the SSD generator tool 202 to upload an image of a single-line diagram (SLD) for a substation 100. In an exemplary embodiment, the single-line diagram (SLD) for the substation 100 corresponds to an electrical diagram depicting a representation of connections and functions of the substation 100 and an associated protection and control system. The image of the SLD is inputted as an AutoCAD file or a portable document format (PDF) file by the technician 208.

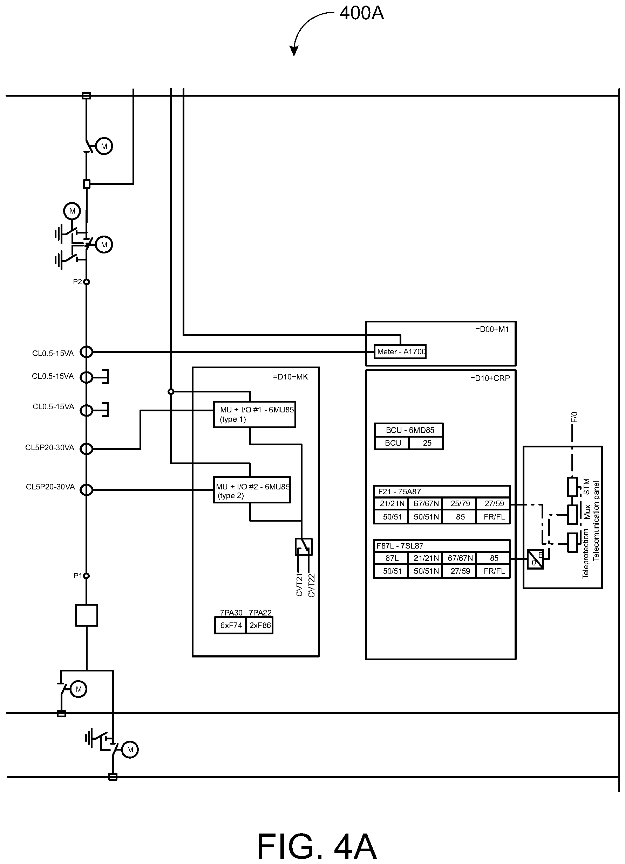

An exemplary single line diagram (referred hereinafter as "SLD") 400A for the substation 100 is shown in FIG 4A which is provided as an input to the SSD generator tool 202. The SLD 400A shown in FIG 4A has two sets of transformers named as "CL0.5-15VA" and two other sets of transformers named as "CL5P20-30VA". A first set of CL5P20-30VA transformers is connected to a first merging unit device named as "MU + I/O #1 - 6MU85 (type 1)" and a second set of CL5P20-30VA transformers is connected to a second merging unit device named as "MU + I/O #2 - 6MU85 (type 2)". Also, a CL0.5-15VA transformer is connected to a meter A1700. The SLD 400A in FIG 4A also shows one or more bay devices named as "BCU-6MD85" (i.e. a bay controller), "F21-7SA81" (i.e. a first line protection device) and "F87L-7SL87" (i.e. a second line protection device).

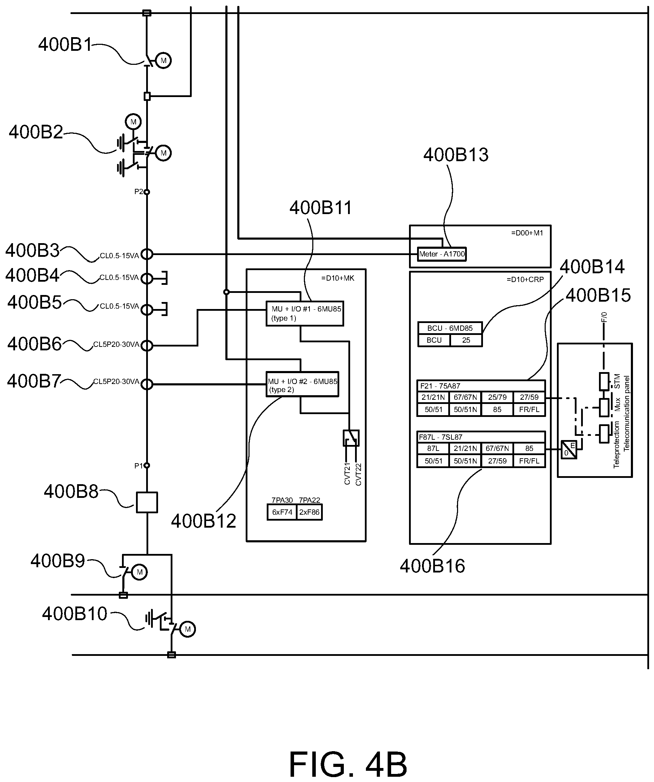

Further, the receiver 306 is configured to receive the image of the SLD 400A for the substation 100 from the interface 302. The receiver 306 is communicably coupled with the parser 308 to communicate the image of the SLD to the parser 308. The parser 308 is configured to identify one or more substation elements from the image of the SLD 400A, using an artificial neural network. Further, the artificial neural network is already trained for identifying the one or more substation elements. In an exemplary embodiment, the artificial neural network is a faster region based convolutional neural network (R-CNN). As an example, FIG 4B shows one or more substation elements 400B1-400B15 identified by the parser 308 from the image of the SLD 400A.

In an exemplary embodiment, the one or more substation elements 400B1-400B15 corresponds to intelligent electronic devices (IEDs), merging unit device/s (MU), busbar/s, disconnector/s, protection function/s, insulator/s, lightning arrestor/s, circuit breakers, isolator/s, earthing switch/es, current transformer/s, voltage transformer/s, power transformer/s, shunt reactor/s, control and protection panel/s, Power Line Carrier Communication (PLCC) equipment/s, and/or low voltage (LV) AC switchgears.

The artificial neural network of the SSD generator tool 202 is generated by training an untrained artificial neural network for identifying the one or more substation elements 400B1-400B15. For this, images of a plurality of single-line diagrams (SLDs) for different substations are fed into the artificial neural network. Along with the images of the plurality of SLDs, some already identified substation elements 400B1-400B15, signal list document/s, interlocking diagram/s, documents components information, and interactions between the substation components are also fed to the untrained artificial neural network of the SSD generator tool 202. By doing this, the untrained artificial neural network parses all these images of the plurality of SLDs and other provided information to recognize shapes/symbols of each substation elements 400B1-400B15 and eventually becomes, a trained artificial neural network. Further, the artificial neural network is also calibrated in a timely manner for identifying the substation elements 400B1-400B15 based on said feeding. That is, if the artificial neural network is unable to correctly recognize a particular substation element 400B1-400B15, then the artificial neural network is automatically or manually calibrated to identify that substation element 400B1-400B15 correctly based on the information feed.

In addition, identifying the one or more substation elements 400B1-400B15 also comprises removing noise from the image of the SLD. For this, the interface 302 communicates the image of the SLD 400A to the image preprocessing unit 314. The image preprocessing unit 314 is configured to process the image of the SLD 400A to remove any noise from the image and enhance the quality of the image. In an exemplary embodiment, spatial domain filtering is used to remove the noise from the image. Any other known techniques or algorithm can also be used by the SSD generator tool 202 to remove the noise and enhance quality of the image of SLD 400A.

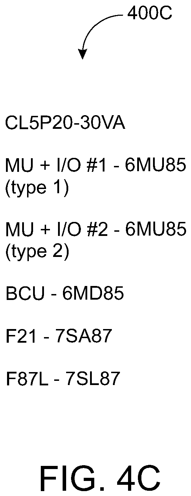

The parser 308 is also configured to fetch textual description associated with the identified substation elements 400B1-400B15 using a deep learning algorithm. In an exemplary embodiment, the deep learning algorithm corresponds to an Efficient accurate scene text detector (EAST) algorithm which is well known in the art. In an exemplary embodiment, the textual description corresponds to a name and a type associated with each of the one or more substation elements 400B1-400B15. As an example, FIG 4C shows textual description 400C (such as "CL0.5-15VA", "CL5P20-30VA", "MU + I/O #1 - 6MU85 (type 1)", "MU + I/O #2 - 6MU85 (type 2)", "BCU-6MD85", "F21-7SA81" and "F87L-7SL87") associated with the identified substation elements 400B1-400B15 is fetched from the image of the SLD 400A.

Further, for fetching the textual description 400C, a Region of Interest (ROI) corresponding to a bay area in the substation 100 is first identified by the SSD generator tool 202. In an exemplary embodiment, the Region of Interest (ROI) corresponding to the bay area is identified by recognizing alphabet, numeric values, alpha-numeric terms or letters in the SLD 400A. Furthermore, from the identified Region of Interest (ROI), the textual description 400C associated with the identified substation elements 400B1-400B15 is fetched.

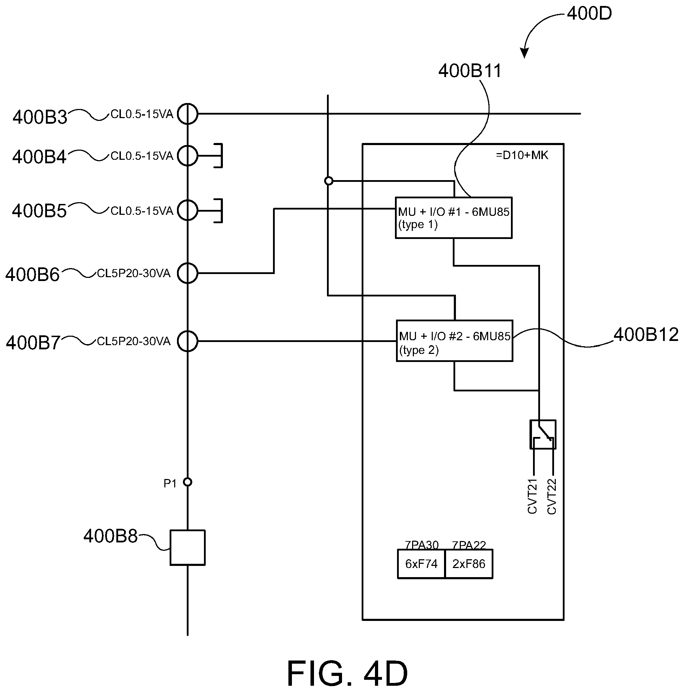

The parser 308 is further configured to determine one or more connections 400D between the identified substation elements 400B1-400B15 using a traversal algorithm. In an exemplary embodiment, the one or more connections 400D between the identified substation elements 400B1-400B15 corresponds to a representation of physical wires between the one or more substation elements 400B1-400B15. In an exemplary embodiment, the traversal algorithm corresponds to a Depth first search (DFS) algorithm which is well known in the art. Referring to FIG 4D, the parser 308 determines that the current transformer "CL5P20-30VA" 400B6 is connected to merging unit device "MU + I/O #1 - 6MU85 (type 1)" 400B11 and current transformer "CL5P20-30VA" 400B7 is connected to merging unit device "MU + I/O #2 - 6MU85 (type 2)" 400B12.

Moreover, the parser 308 is communicably coupled with the processor 310 to communicate the determined connections 400D between identified substation elements 400B1-400B15 and the fetched textual description 400C. Also, the processor 310 is configured to generate communication source reference mappings 400E between the substation elements 400B1-400B15 of the SSD file for the substation 100 based on the determined connections 400D between the identified substation elements 400B1-400B15 and the fetched textual description 400C. Herein, the communication source reference mappings 400E corresponds to sampled measured values (SMV) mapping and generic object-oriented substation event (GOOSE) mapping between the identified substation elements 400B1-400B15 in the SSD file for the substation 100. The generated communication source reference mappings 400E between the substation elements 400B1-400B15 of the SSD file is outputted by the interface 302 of the SSD generator tool 202.

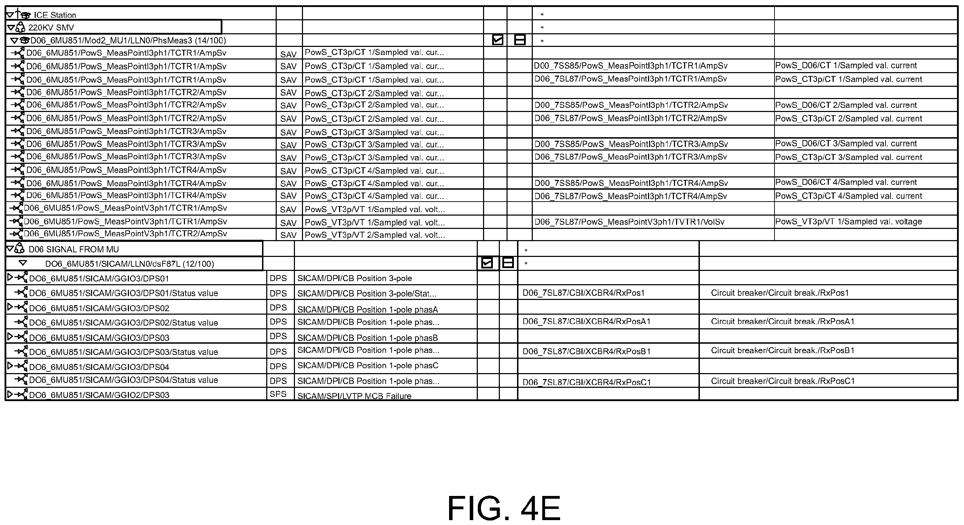

As an example, based on the determined connections 400D between identified substation elements 400B1-400B15 and the fetched textual description 400C, the SSD generator tool 202 determines that since "CL5P20-30VA" 400B6 is connected to merging unit device "MU + I/O #1 - 6MU85 (type 1)" 400B11 and current transformer "CL5P20-30VA" 400B7 is connected to merging unit device "MU + I/O #2 - 6MU85 (type 2)" 400B12, the merging unit device "MU + I/O #1 - 6MU85 (type 1)" 400B11 and the merging unit device "MU + I/O #2 - 6MU85 (type 2)" 400B12 is going to publish the SMV current and voltage. Further, the SSD generator tool 202 also determines that the bay devices "BCU-6MD85" 400B14, "F21-7SA81" 400B15 and "F87L-7SL87" 400B16 is also going to subscribe for the SMV stream. By using this configuration information, communication source reference mappings 400E (as shown in FIG 4E) between the substation elements 400B1-400B15, of the SSD file for the substation 100 is generated by the SSD generator tool 202.

Also, the transmitter 304 is configured to transmit any information or the generated SSD file to other tools such as the system configurator tool 204 and the IED configurator tool 206. Similarly, the receiver 306 also is configured to receive any information from the system configurator tool 204 and the IED configurator tool 206. The memory 312 is configured to store the generated communication source reference mappings 400E between the substation elements 400B1-400B15 of the SSD file for the substation 100.

Further, the processor 310 is communicably coupled with the interface 302, the transmitter 304, the receiver 306, the parser 308, the memory 312, and/or the image preprocessing unit 314 of the SSD generator tool 202.

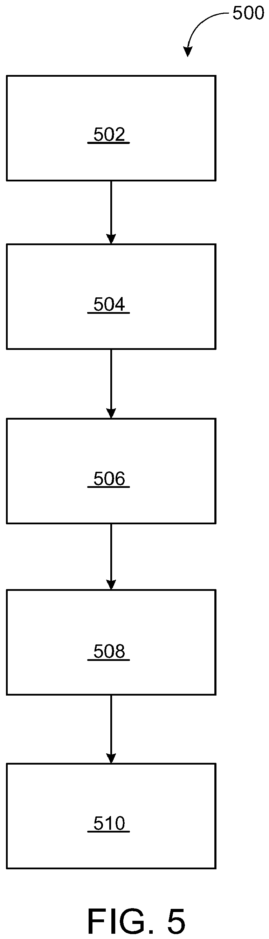

FIG 5 is a method diagram 500 for generating communication source reference mappings 400E of a system specification description (SSD) file for a substation 100, in accordance with an embodiment of the present invention. The method 500 at step 502 receives an image of a single-line diagram (SLD) for a substation, by an SSD generator tool 202. In an exemplary embodiment, the single-line diagram (SLD) for the substation 100 corresponds to an electrical diagram depicting a representation of connections 400D and functions of the substation 100 and an associated protection and control system. An exemplary image of a single-line diagram (referred hereinafter as "SLD") 400A for the substation 100 is shown in FIG 4A.

At step 504, one or more substation elements 400B1-400B15 from the image of the SLD are identified by the SSD generator tool 202, using an artificial neural network. Further, the artificial neural network is trained for identifying the one or more substation elements 400B1-400B15. In an exemplary embodiment, the artificial neural network is a faster region based convolutional neural network (R-CNN). As an example, FIG 4B shows one or more substation elements 400B1-400B15 identified by the parser 308 from the image of the SLD 400A as explained above in greater details.

At step 506, textual description 400C associated with the identified substation elements 400B1-400B15 is fetched by the SSD generator tool 202 using a deep learning algorithm. In an exemplary embodiment, the deep learning algorithm corresponds to an Efficient accurate scene text detector (EAST) algorithm which is well known in the art. In an exemplary embodiment, the textual description 400C corresponds to a name and a type associated with each of the one or more substation elements 400B1-400B15. As an example, FIG 4C shows textual description 400C (such as "CL0.5-15VA", "CL5P20-30VA", "MU + I/O #1 - 6MU85 (type 1)", "MU + I/O #2 - 6MU85 (type 2)", "BCU-6MD85", "F21-7SA81" and "F87L-7SL87") associated with the identified substation elements 400B1-400B15 is fetched from the image of the SLD 400A.

At step 508, one or more connections 400D between the identified substation elements 400B1-400B15 is determined by the SSD generator tool 202 using a traversal algorithm. In an exemplary embodiment, the one or more connections 400D between the identified substation elements 400B1-400B15 corresponds to a representation of physical wires between the one or more substation elements 400B1-400B15. In an exemplary embodiment, the traversal algorithm corresponds to a Depth first search (DFS) algorithm which is well known in the art. Referring to FIG 4D, current transformer "CL5P20-30VA" 400B6 is connected to merging unit device "MU + I/O #1 - 6MU85 (type 1)" 400B11 and current transformer "CL5P20-30VA" 400B7 is connected to merging unit device "MU + I/O #2 - 6MU85 (type 2)" 400B12.

At step 510, the communication source reference mappings 400E between the substation elements 400B1-400B15 is generated by the SSD generator tool 202. Such communication source reference 400E is of the SSD file for the substation 100 which is generated based on the determined connections 400D between the identified substation elements 400B1-400B15 and the fetched textual description 400C. Herein, the communication source reference mappings 400E correspond to sampled measured values (SMV) mapping and generic object-oriented substation event (GOOSE) mapping between the identified substation elements 400B1-400B15 in the SSD file. An example of communication source reference mappings 400E is shown in FIG 4E.

The present invention offers the following technical advantages: (a) avoids manual procedure for generating a system specification description (SSD) file, (b) automatically generates communication source reference mappings between substation elements, of the SSD file for a substation, (c) eliminates requirement of a technician to generate the communication source reference manually, (d) saves time and efforts needed by the technician to generate the communication source reference manually, and (e) provides an accurate, automated and easy way of generating sampled measured values (SMV) mapping and generic object-oriented substation event (GOOSE) mapping between substation elements, for the SSD file.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

### List Of Reference Numerals

- 100: Substation
- 102A-102C: Transformers
- 102A: First Transformer
- 102B: Second Transformer
- 102C: Third Transformer
- 104A-104B: Merging Unit Devices
- 104A: First Merging Unit Device
- 104B: Second Merging Unit Device
- 106B-106D: Bay Devices
- 106A: Meter Device
- 106B: Bay Controller
- 106C: First Line Protection Device
- 106D: Second Line Protection Device
- 104A-104B, 106A-106D: Intelligent Electronic Devices
- 202: System Specification Description (SSD) Generator Tool
- 204: System Configurator Tool
- 206: IED Configurator Tool
- 208: Technician
- 302: Interface
- 304: Transmitter
- 306: Receiver
- 308: Parser
- 310: Processor
- 312: Memory
- 314: Image Preprocessing Unit
- 400A: SLD/Single Line Diagram
- 400B1-400B15: Substation Elements
- 400C: Textual Description
- 400D: Connections
- 400E: Communication Source Reference
- 500: Method
- 502,504,506,508,510: Method Steps

## Claims

1. A method (500) for generating communication source reference mappings (400E) of a system specification description (SSD) file for a substation (100), the method (500) comprising:
receiving (502) an image of a single-line diagram (SLD) (400A) for the substation (100), by an SSD generator tool (202);
identifying (504) one or more substation elements (400B1-400B15) from the image of the SLD (400A), using an artificial neural network, wherein the artificial neural network is trained for identifying the one or more substation elements (400B1-400B15);
fetching (506) textual description (400C) associated with the identified substation elements (400B1-400B15) using a deep learning algorithm;
determining (508) one or more connections (400D) between the identified substation elements (400B1-400B15) using a traversal algorithm; and
generating (510) the communication source reference mappings (400E) between the substation elements (400B1-400B15), of the SSD file based on the determined connections (400D) between the identified substation elements (400B1-400B15) and the fetched textual description (400C).

2. The method (500) according to claim 1, wherein identifying the one or more substation elements (400B1-400B15) comprises removing noise from the image.

3. The method (500) according to claim 1, wherein the communication source reference mappings (400E) correspond to sampled measured values (SMV) mapping and generic object-oriented substation event (GOOSE) mapping between the identified substation elements (400B1-400B15) in the SSD file.

4. The method (500) according to claim 1, further comprising training an untrained artificial neural network for identifying the one or more substation elements (400B1-400B15), by performing:
- feeding images of a plurality of single-line diagrams (SLDs) for a substation, to the artificial neural network of the SSD generator tool (202);
- feeding the identified substation elements (400B1-400B15), components information, and interactions between the substation components in the SSD generator tool (202) to the artificial neural network of the SSD generator tool (202); and
- calibrating the artificial neural network for identifying the substation elements (400B1-400B15) based on said feeding.

5. The method (500) according to claim 1, wherein the SLD (400A) for the substation (100) corresponds to an electrical diagram depicting a representation of connections (400D) and functions of the substation and an associated protection and control system.

6. The method (500) according to claim 1, wherein the one or more substation elements (400B1-400B15) corresponds to intelligent electronic devices (IEDs), merging unit device/s, busbar/s, disconnector/s, protection function/s, insulator/s, lightning arrestor/s, circuit breakers, isolator/s, earthing switch/es, current transformer/s, voltage transformer/s, power transformer/s, shunt reactor/s, control and protection panel/s, Power Line Carrier Communication (PLCC) equipment/s, and/or low voltage (LV) AC switchgears.

7. The method (500) according to claim 1, wherein the artificial neural network is a faster region based convolutional neural network (R-CNN).

8. The method (500) according to claim 1, wherein the textual description (400C) corresponds to a name and a type associated with each of the one or more substation elements (400B1-400B15).

9. The method (500) according to claim 1, further comprising, identifying, from the image of the SLD (400A), a Region of Interest (ROI) corresponding to a bay area in the substation for fetching the textual description (400C).

10. The method (500) according to claim 9, wherein the textual description (400C) associated with the identified substation elements (400B1-400B15) is fetched from the identified Region of Interest (ROI) corresponding to the bay area.

11. The method (500) according to the claim 1, wherein the deep learning algorithm corresponds to an Efficient accurate scene text detector (EAST) algorithm.

12. The method (500) according to claim 1, wherein the one or more connections (400D) between the identified substation elements (400B1-400B15) corresponds to a representation of physical wires between the one or more substation elements (400B1-400B15).

13. The method (500) according to claim 1, wherein the traversal algorithm corresponds to a Depth first search (DFS) algorithm.

14. The method (500) according to claim 1, wherein the SSD file is associated with the substation (100).

15. A system specification description (SSD) generator tool (202) for generating communication source reference mappings (400E) of a system specification description (SSD) file for a substation (100), the system comprising:
a receiver (306) configured to receive an image of a single-line diagram (SLD) (400A) for the substation (100);
a parser (308) configured to:
identify one or more substation elements (400B1-400B15) from the image of the SLD (400A), using an artificial neural network, wherein the artificial neural network is trained for identifying the one or more substation elements (400B1-400B15);
fetch textual description (400C) associated with the identified substation elements (400B1-400B15) using a deep learning algorithm; and
determine one or more connections (400D) between the identified substation elements (400B1-400B15) using a traversal algorithm; and
a processor (310) configured to generate the communication source reference mappings (400E) between the substation elements (400B1-400B15) of the SSD file based on the determined connections (400D) between the identified substation elements (400B1-400B15) and the fetched textual description (400C).
